# EUROPEAN PATENT APPLICATION

(11) **EP 4 672 691 A1**
(43) Date of publication of application: **31.12.2025**
(21) Application number: 24777827.7
(22) Date of filing: 20.03.2024
(51) Int. Cl.: H04L 41/0663, H04W 4/24

(54) **COMMUNICATION METHOD AND COMMUNICATION APPARATUS**

(30) Priority: 30.03.2023 CN 202310366072
(71) Applicant: Huawei Technologies Co., Ltd., Shenzhen, Guangdong 518129 (CN)
(72) Inventor: FENG, Hao, Shenzhen, Guangdong 518129 (CN)
(74) Representative: Grünecker Patent- und Rechtsanwälte PartG mbB
(86) International application number: PCT/CN2024/082731
(87) International publication number: WO 2024/199038

(57) **Abstract**

Embodiments of this application provide a communication method and a communication apparatus. According to the method in this application, a charging function network element may receive information about at least one second network element from a network repository function network element, where the at least one second network element is an alternative network element when a first network element is faulty. Therefore, when the first network element is faulty, the charging function network element may send a notification message to one of the at least one second network element based on the information about the at least one second network element, so that the second network element performs a corresponding operation on a session of a terminal device based on the notification message, to improve user experience.

## Description

This application claims priority to Chinese Patent Application No. 202310366072.7, filed with the China National Intellectual Property Administration on March 30, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In an entire interaction procedure between a core network element (for example, a session management function (session management function, SMF) network element or a policy control function (policy control function, PCF) network element) and a charging function (charging function, CHF) network element, if the core network element is always in a normal working state, the core network element and the CHF network element can normally interact with each other. If the core network element cannot work normally (for example, the core network element is faulty, or is in a breakdown state due to a disaster), the CHF network element still delivers a notification message based on a callback (callback) address provided by the core network element in an initial subscription message. However, because the core network element cannot work normally, the callback address of the core network element is unreachable. Consequently, the notification message fails to be delivered. When the notification message fails to be delivered, a session management request of a user cannot be processed in time, and user experience is affected.

### SUMMARY

Embodiments of this application provide a communication method and a communication apparatus, so that a charging function network element delivers, in time, a notification message to an alternative network element when a first network element is faulty. In this way, the alternative network element performs a corresponding operation on a session of a user based on second information included in the notification message, to improve user experience.

According to a first aspect, a communication method is provided. The method may be performed by a charging function network element, or may be performed by a component (for example, a chip or a circuit) of a charging function network element. This is not limited. Descriptions are provided below by using an example in which the method is performed by the charging function network element.

The method includes: The charging function network element sends a request message to a network repository function network element, where the request message is used to request information about at least one second network element, the at least one second network element is an alternative network element when a first network element is faulty, and the information about the at least one second network element includes address information of the at least one second network element. The charging function network element receives first information from the network repository function network element, where the first information includes the information about the at least one second network element. The charging function network element sends a notification message to one of the at least one second network element based on the information about the at least one second network element, where the notification message is used to perform a corresponding operation on a session of a terminal device, and the terminal device is served by the first network element before the first network element is faulty.

Based on the foregoing technical solution, the charging function network element may receive the information about the at least one second network element from the network repository function network element, where the at least one second network element is the alternative network element when the first network element is faulty. Further, when the first network element is faulty, the charging function network element may send the notification message to one of the at least one second network element, to notify the second network element to perform a corresponding operation on the session of the terminal device, and ensure that the session of the terminal device continues, so as to ensure user experience.

In addition, according to the method provided in this application, the second network element does not need to send an update notification to the charging function network element when the first network element is faulty, to send address information of the second network element to the charging function network element, thereby avoiding a message signaling storm caused by a full update request initiated by the second network element.

Address information of the at least one second network element includes an internet protocol (internet protocol, IP) address of each of the at least one second network element. Alternatively, address information of the at least one second network element includes an IP address of each of the at least one second network element and a port number for providing a service for the session of the terminal device.

In a possible implementation, the second network element is a policy control function network element, the notification message includes information about a counter corresponding to the session of the terminal device, and the corresponding operation is adjusting a bandwidth of the session of the terminal device.

The counter (counter) corresponding to the session of the terminal device is used to trace a consumption status of the terminal device inside the charging function network element. The counter may be a counter of traffic used by the session of the terminal device, a counter of used duration, a counter of a quantity of times of being invoked, or the like. The counter may also be referred to as a policy counter (policy counter).

In another possible implementation, the second network element is a session management function network element, the notification message includes reauthorization information, and the corresponding operation is initiating a reauthorization charging request for the session of the terminal device.

With reference to the first aspect, in some implementations of the first aspect, the request message includes second information that has an association relationship with the information about the at least one second network element, and the second information includes one or more of the following: information about the charging function network element, type information of the first network element, address information of the first network element, information about the terminal device, or information about a first service provided by the first network element.

For example, after the charging function network element is initially started, after the charging function network element receives a session create request message from the first network element, or after the charging function network element determines that the first network element is faulty, the request message sent by the charging function network element to the network repository function network element includes the second information. The second information may include one or more of the following: the information about the charging function network element, the type information of the first network element, or the information about the first service.

For another example, after the charging function network element receives a session create request message from the first network element, or after the charging function network element determines that the first network element is faulty, the request message sent by the charging function network element to the network repository function network element includes the second information. The second information may include one or more of the following: the information about the charging function network element, the type information of the first network element, the address information of the first network element, the information about the terminal device served by the first network element, or the information about the first service.

With reference to the first aspect, in some implementations of the first aspect, the information about the at least one second network element further includes priority information of the at least one second network element. That the charging function network element sends a notification message to one of the at least one second network element based on the information about the at least one second network element includes: The charging function network element sends, based on the information about the at least one second network element, the notification message to a second network element with a highest priority in the at least one second network element.

Based on the foregoing technical solution, if alternative network elements when the first network element is faulty include a plurality of second network elements, the charging function network element may select the second network element with the highest priority to provide a service for the terminal device, to help improve user experience.

With reference to the first aspect, in some implementations of the first aspect, the information about the at least one second network element further includes capacity information of the at least one second network element. That the charging function network element sends a notification message to one of the at least one second network element based on the information about the at least one second network element includes: The charging function network element sends, based on the information about the at least one second network element, the notification message to a second network element with a largest capacity in the at least one second network element.

Based on the foregoing technical solution, if alternative network elements when the first network element is faulty include a plurality of second network elements, the charging function network element may select the second network element with the largest capacity to provide a service for the terminal device, to help improve user experience.

With reference to the first aspect, in some implementations of the first aspect, the method further includes: When the charging function network element fails to send the notification message to the first network element, the charging function network element determines that the first network element is faulty.

With reference to the first aspect, in some implementations of the first aspect, the request message is further used to request service status information of the first network element, and the service status information is used to determine whether the first network element is faulty. The method further includes: The charging function network element receives the service status information from the network repository function network element; and the charging function network element determines, based on the service status information, that the first network element is faulty.

Based on the foregoing technical solution, when receiving the service status information from the network repository function network element, the charging function network element may determine, in time based on the service status information, that the first network element is faulty.

With reference to the first aspect, in some implementations of the first aspect, the request message is further used to request service status information of the first network element, the service status information is used to determine whether the first network element is faulty, and the first information further includes the service status information. The method further includes: The charging function network element determines, based on the service status information, that the first network element is faulty.

Based on the foregoing technical solution, when receiving the service status information from the network repository function network element, the charging function network element may determine, in time based on the service status information, that the first network element is faulty.

According to a second aspect, a communication method is provided. The method may be performed by a network repository function network element, or may be performed by a component (for example, a chip or a circuit) of a network repository function network element. This is not limited. Descriptions are provided below by using an example in which the method is performed by the network repository function network element.

The method includes: The network repository function network element receives a request message from a charging function network element, where the request message is used to request information about at least one second network element, the at least one second network element is an alternative network element when a first network element is faulty, and the information about the at least one second network element includes address information of the at least one second network element. The network repository function network element sends first information to the charging function network element, where the first information includes the information about the at least one second network element.

Based on the foregoing technical solution, the charging function network element may receive the information about the at least one second network element from the network repository function network element, where the at least one second network element is the alternative network element when the first network element is faulty. Further, when the first network element is faulty, the charging function network element can send a notification message to one of the at least one second network element based on the information about the at least one second network element, to notify the second network element to perform a corresponding operation on a session of a terminal device, and ensure that the session of the terminal device continues, so as to ensure user experience.

Address information of the at least one second network element includes an IP address of each of the at least one second network element. Alternatively, address information of the at least one second network element includes an IP address of each of the at least one second network element and a port number for providing a service for the session of the terminal device.

With reference to the second aspect, in some implementations of the second aspect, the request message includes second information that has an association relationship with the information about the at least one second network element, and the second information includes one or more of the following: information about the charging function network element, type information of the first network element, address information of the first network element, information about the terminal device served by the first network element, or information about a first service provided by the first network element.

With reference to the second aspect, in some implementations of the second aspect, the information about the at least one second network element further includes priority information of the at least one second network element.

Based on the foregoing technical solution, the charging function network element can select a second network element with a highest priority from a plurality of second network elements.

With reference to the second aspect, in some implementations of the second aspect, the information about the at least one second network element further includes capacity information of the at least one second network element.

Based on the foregoing technical solution, the charging function network element can select a second network element with a largest capacity from a plurality of second network elements.

With reference to the second aspect, in some implementations of the second aspect, the request message is further used to request service status information of the first network element, and the service status information is used to determine whether the first network element is faulty. The method further includes: The network repository function network element sends the service status information to the charging function network element.

Based on the foregoing technical solution, the charging function network element can determine, in time based on the service status information, that the first network element is faulty.

With reference to the second aspect, in some implementations of the second aspect, the request message is further used to request service status information of the first network element, the service status information is used to determine whether the first network element is faulty, and the first information further includes the service status information.

Based on the foregoing technical solution, the charging function network element can determine, in time based on the service status information, that the first network element is faulty.

With reference to the second aspect, in some implementations of the second aspect, the method further includes: The network repository function network element receives a registration request message from the first network element, where the registration request message includes the information about the at least one second network element.

Based on the foregoing technical solution, the first network element registers the information about the at least one second network element with the network repository function network element, so that the charging function network element can obtain the information about the at least one second network element from the network repository function network element. Further, when the first network element is faulty, the charging function network element may send the notification message to one of the at least one second network element based on the information about the at least one second network element, to notify the second network element to perform a corresponding operation on the session of the terminal device, so as to ensure user experience.

With reference to the second aspect, in some implementations of the second aspect, the registration request message further includes one or more of the following: the information about the first service provided by the first network element, the address information of the first network element, type information of a network element that is allowed to use the first service, priority information of the first network element, capacity information of the first network element, the service status information of the first network element, or the information about the terminal device served by the first network element. The service status information is used to determine whether the first network element is faulty.

According to a third aspect, a communication method is provided. The method may be performed by a second network element, or may be performed by a component (for example, a chip or a circuit) of a second network element. This is not limited. Descriptions are provided below by using an example in which the method is performed by the second network element.

The method includes: The second network element receives a notification message from a charging function network element, where the second network element is an alternative network element when a first network element is faulty. The second network element determines, based on a session identifier in a delivery address of the notification message, that the notification message is used to perform a corresponding operation on a session of a terminal device, where the session identifier is used to determine a session between the first network element and the charging function network element, and the session between the first network element and the charging function network element corresponds to the session of the terminal device. The second network element performs a corresponding operation on the session of the terminal device based on the notification message.

Based on the foregoing technical solution, when the first network element is faulty, the charging function network element may send the notification message to the second network element, to notify the second network element to perform a corresponding operation on the session of the terminal device, and ensure that the session of the terminal device continues, so as to ensure user experience.

In a possible implementation, the second network element is a policy control function network element, and the notification message includes information about a counter corresponding to the session of the terminal device; and that the second network element performs a corresponding operation on the session of the terminal device based on the notification message includes: The second network element adjusts a bandwidth of the session of the terminal device based on the information about the counter.

In another possible implementation, the second network element is a session management function network element, and the notification message includes reauthorization information; and that the second network element performs a corresponding operation on the session of the terminal device based on the notification message includes: The second network element initiates a reauthorization charging request for the session of the terminal device based on the reauthorization information.

According to a fourth aspect, a communication method is provided. The method may be performed by a first network element, or may be performed by a component (for example, a chip or a circuit) of a first network element. This is not limited. Descriptions are provided below by using an example in which the method is performed by the first network element.

The method includes: The first network element sends a registration request message to a network repository function network element, where the registration request message includes information about at least one second network element, the at least one second network element is an alternative network element when the first network element is faulty, and the information about the at least one second network element includes address information of the at least one second network element. The first network element receives a registration response message from the network repository function network element.

Based on the foregoing technical solution, the first network element registers the information about the at least one second network element with the network repository function network element, so that the charging function network element can obtain the information about the at least one second network element from the network repository function network element. Further, when the first network element is faulty, the charging function network element may send a notification message to one of the at least one second network element based on the information about the at least one second network element, to notify the second network element to perform a corresponding operation on a session of a terminal device, and ensure that the session of the terminal device continues, so as to ensure user experience.

With reference to the fourth aspect, in some implementations of the fourth aspect, the registration request message further includes one or more of the following: information about a first service provided by the first network element, address information of the first network element, type information of a network element that is allowed to use the first service, priority information of the first network element, capacity information of the first network element, service status information of the first network element, or information about the terminal device served by the first network element. The service status information is used to determine whether the first network element is faulty.

With reference to the fourth aspect, in some implementations of the fourth aspect, the information about the at least one second network element further includes one or two of the following: priority information of the at least one second network element or capacity information of the at least one second network element.

According to a fifth aspect, a communication apparatus is provided. The communication apparatus has a function of implementing the method in any one of the first aspect or the possible implementations of the first aspect. The function may be implemented by hardware, or may be implemented by executing corresponding software by hardware. The hardware or the software includes one or more units, for example, a transceiver unit and/or a processing unit, corresponding to the foregoing function.

According to a sixth aspect, a communication apparatus is provided. The communication apparatus has a function of implementing the method in any one of the second aspect or the possible implementations of the second aspect. The function may be implemented by hardware, or may be implemented by executing corresponding software by hardware. The hardware or the software includes one or more units, for example, a transceiver unit and/or a processing unit, corresponding to the foregoing function.

According to a seventh aspect, a communication apparatus is provided. The communication apparatus has a function of implementing the method in any one of the third aspect or the possible implementations of the third aspect. The function may be implemented by hardware, or may be implemented by executing corresponding software by hardware. The hardware or the software includes one or more units, for example, a transceiver unit and/or a processing unit, corresponding to the foregoing function.

According to an eighth aspect, a communication apparatus is provided. The communication apparatus has a function of implementing the method in any one of the fourth aspect or the possible implementations of the fourth aspect. The function may be implemented by hardware, or may be implemented by executing corresponding software by hardware. The hardware or the software includes one or more units, for example, a transceiver unit and/or a processing unit, corresponding to the foregoing function.

According to a ninth aspect, a communication apparatus is provided, and includes a processor. The processor is coupled to a memory, and may be configured to execute instructions in the memory, to implement the method in any one of the first aspect and the possible implementations of the first aspect. For example, the communication apparatus further includes a memory. For example, the communication apparatus further includes a communication interface, and the processor is coupled to the communication interface.

In an implementation, the communication apparatus is a charging function network element. When the communication apparatus is the charging function network element, the communication interface may be a transceiver or an input/output interface.

In another implementation, the communication apparatus is a chip disposed in a charging function network element. When the communication apparatus is the chip disposed in the charging function network element, the communication interface may be an input/output interface.

For example, the transceiver may be a transceiver circuit. For example, the input/output interface may be an input/output circuit.

According to a tenth aspect, a communication apparatus is provided, and includes a processor. The processor is coupled to a memory, and may be configured to execute instructions in the memory, to implement the method in any one of the second aspect and the possible implementations of the second aspect. For example, the communication apparatus further includes a memory. For example, the communication apparatus further includes a communication interface, and the processor is coupled to the communication interface.

In an implementation, the communication apparatus is a network repository function network element. When the communication apparatus is the network repository function network element, the communication interface may be a transceiver or an input/output interface.

In another implementation, the communication apparatus is a chip disposed in a network repository function network element. When the communication apparatus is the chip disposed in the network repository function network element, the communication interface may be an input/output interface.

For example, the transceiver may be a transceiver circuit. For example, the input/output interface may be an input/output circuit.

According to an eleventh aspect, a communication apparatus is provided, and includes a processor. The processor is coupled to a memory, and may be configured to execute instructions in the memory, to implement the method in any one of the third aspect and the possible implementations of the third aspect. For example, the communication apparatus further includes a memory. For example, the communication apparatus further includes a communication interface, and the processor is coupled to the communication interface.

In an implementation, the communication apparatus is a second network element. When the communication apparatus is the second network element, the communication interface may be a transceiver or an input/output interface.

In another implementation, the communication apparatus is a chip disposed in a second network element. When the communication apparatus is the chip disposed in the second network element, the communication interface may be an input/output interface.

For example, the transceiver may be a transceiver circuit. For example, the input/output interface may be an input/output circuit.

According to a twelfth aspect, a communication apparatus is provided, and includes a processor. The processor is coupled to a memory, and may be configured to execute instructions in the memory, to implement the method in any one of the fourth aspect and the possible implementations of the fourth aspect. For example, the communication apparatus further includes a memory. For example, the communication apparatus further includes a communication interface, and the processor is coupled to the communication interface.

In an implementation, the communication apparatus is a first network element. When the communication apparatus is the first network element, the communication interface may be a transceiver or an input/output interface.

In another implementation, the communication apparatus is a chip disposed in a first network element. When the communication apparatus is the chip disposed in the first network element, the communication interface may be an input/output interface.

For example, the transceiver may be a transceiver circuit. For example, the input/output interface may be an input/output circuit.

According to a thirteenth aspect, a processor is provided, and includes an input circuit, an output circuit, and a processing circuit. The processing circuit is configured to: receive a signal through the input circuit, and transmit a signal through the output circuit, to enable the processor to perform the method in any one of the possible implementations of the first aspect to the fourth aspect.

During specific implementation, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a fourteenth aspect, a processing apparatus is provided, and includes a processor and a memory. The processor is configured to: read instructions stored in the memory, receive a signal by using a receiver, and transmit a signal by using a transmitter, to perform the method in any one of the possible implementations of the first aspect to the fourth aspect.

For example, there are one or more processors, and there are one or more memories.

For example, the memory may be integrated with the processor, or the memory and the processor are disposed separately.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that a related data exchange process, for example, sending first information may be a process of outputting the first information from the processor, and receiving the first information may be a process of receiving the first information by the processor. Specifically, data output by the processor may be output to the transmitter, and input data received by the processor may be from the receiver. The transmitter and the receiver may be collectively referred to as a transceiver.

The processing apparatus according to the fourteenth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, implemented by reading software code stored in the memory. The memory may be integrated into the processor, or may be located outside the processor and exist independently.

According to a fifteenth aspect, a computer program product is provided. The computer program product includes a computer program (which may also be referred to as code or instructions), and when the computer program is run, a computer is enabled to perform the method in any one of the possible implementations of the first aspect to the fourth aspect.

According to a sixteenth aspect, a computer-readable storage medium is provided. The computer-readable storage medium stores a computer program (which may also be referred to as code or instructions), and when the computer program is run on a computer, the method in any one of the possible implementations of the first aspect to the fourth aspect is performed.

According to a seventeenth aspect, a communication system is provided, and includes the foregoing charging function network element, network repository function network element, and second network element.

Optionally, the communication system further includes the foregoing first network element.

### BRIEF DESCRIPTION OF DRAWINGS

FIG. 1 is a diagram of a communication system applicable to a method according to an embodiment of this application;
FIG. 2 is a schematic flowchart applicable to interaction between a PCF and a CHF;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a block diagram of a communication apparatus according to an embodiment of this application;
FIG. 8 is a block diagram of a communication device according to another embodiment of this application; and
FIG. 9 is a diagram of a chip system according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a 5^{th} generation (5^{th} Generation, 5G) system, a new radio (New Radio, NR) system, a 6^{th} generation (6^{th} generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine-to-machine (machine-to-machine, M2M) communication system, an internet of things (internet of Things, IoT) communication system, a vehicle-to-everything (vehicle-to-everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In the descriptions of this application, "/" indicates an "or" relationship between associated objects unless otherwise specified. For example, A/B may indicate A or B; and "and/or" in this application is merely an association relationship for describing associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used to distinguish between same items or similar items that have basically same functions and effects in embodiments of this application. A person skilled in the art may understand that the words such as "first" and "second" do not limit a quantity or an execution sequence, and the words such as "first" and "second" do not indicate a definite difference. In addition, in embodiments of this application, the word such as "example" or "for example" is used to represent giving an example, an illustration, or descriptions. Any embodiment or design scheme described as an "example" or with "for example" in embodiments of this application should not be explained as being more preferred or having more advantages than another embodiment or design scheme. Exactly, use of the word such as "example" or "for example" is intended to present a related concept in a specific manner for ease of understanding.

In addition, the network architecture and the service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

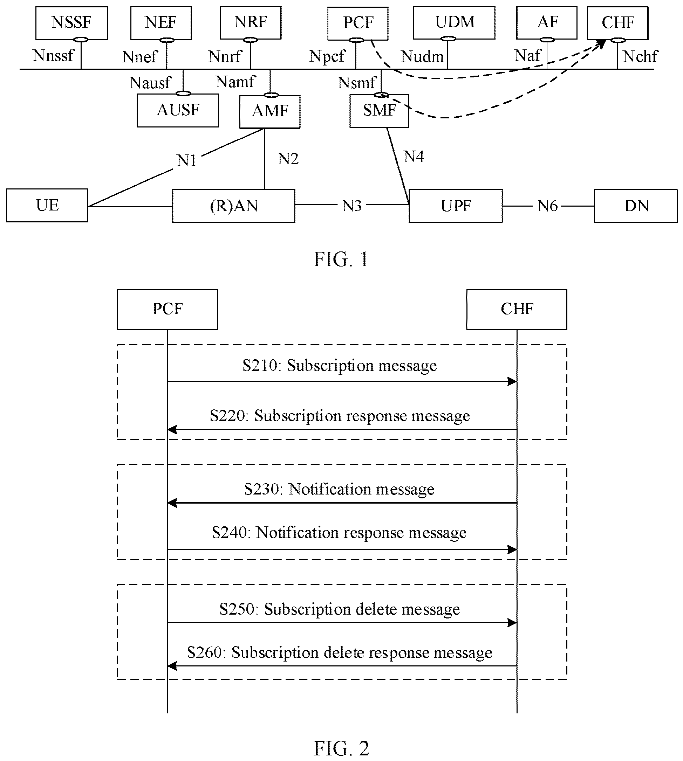

For ease of understanding embodiments of this application, an application scenario of embodiments of this application is first described in detail with reference to FIG. 1.
1. User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital processor (personal digital assistant, PDA), a handheld device having a wireless communication function, a computing device or another processing device connected to a wireless modem, a vehicle-mounted device, an uncrewed aerial vehicle, a wearable device, a terminal device in a 5G network, a terminal device in an evolved PLMN, or the like. This is not limited in embodiments of this application.
2. An access network (access network, AN) provides a network access function for an authorized user in a specific area, and can use transmission tunnels with different quality based on user levels, service requirements, and the like. Access networks may be access networks using different access technologies. A current access network technology includes a radio access network technology used in a 3^{rd} generation (3^{rd} generation, 3G) system, a radio access network technology used in a 4^{th} generation (4^{th} generation, 4G) system, or a next generation radio access network (next generation radio access network, NG-RAN) technology (for example, a radio access network technology used in a 5G system).

An access network that implements the network access function based on a wireless communication technology may be referred to as a radio access network (radio access network, RAN). The radio access network can manage radio resources, provide an access service for a terminal, and further complete forwarding of a control signal and user data between the terminal and a core network.

The radio access network device may be, for example, a NodeB (NodeB), an evolved NodeB (evolved NodeB, eNB, or eNodeB), a next generation node base station (next generation Node Base station, gNB) in a 5G mobile communication system, a base station in a future mobile communication system, or an access point (access point, AP) in a Wi-Fi wireless hotspot system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. An access management network element is mainly used for mobility management and access management, is responsible for transferring a user policy between the user equipment and a policy control function (policy control function, PCF) network element, and the like, and may be configured to implement a function other than session management in a mobility management entity (mobility management entity, MME) function, for example, an access authorization (authentication) function.

In the 5G communication system, the access management network element may be an access and mobility management function (access and mobility management function, AMF) network element. In a future communication system, the access management network element may still be an AMF network element, or may have another name. This is not limited in this application.

4. A session management network element is mainly configured to: manage a session, allocate and manage an internet protocol (Internet protocol, IP) address of the user equipment, select an endpoint that can manage a user plane function interface and a policy control and charging function interface, perform downlink data communication, and the like.

In the 5G communication system, the session management network element may be a session management function (session management function, SMF) network element. In the future communication system, the session management network element may still be an SMF network element, or may have another name. This is not limited in this application.

5. A user plane network element is configured to: perform packet routing and forwarding, perform quality of service (quality of service, QoS) processing on user plane data, complete user plane data forwarding, perform session/flow-level charging statistics collection, implement a bandwidth limiting function, and the like.

In the 5G communication system, the user plane network element may be a user plane function (user plane function, UPF) network element. In the future communication system, the user plane network element may still be a UPF network element, or may have another name. This is not limited in this application.

6. A data network element is configured to provide a network for data transmission.

In the 5G communication system, the data network element may be a data network (data network, DN) element. In the future communication system, the data network element may still be a DN element, or may have another name. This is not limited in this application.

7. A policy control network element is configured to: provide guidance on a unified policy framework for network behavior, provide policy rule information for a control plane function network element (for example, the AMF network element or the SMF network element), and the like.

In the 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

8. A data management network element is configured to: perform user equipment identifier processing, perform access authentication, perform registration, perform mobility management, and the like.

In the 5G communication system, the data management network element may be a unified data management (unified data management, UDM) network element. In the 4G communication system, the data management network element may be a home subscriber server (home subscriber server, HSS) network element. In the future communication system, the data management network element may still be a UDM network element, or may have another name. This is not limited in this application.

9. A network exposure function (network exposure function, NEF) network element is configured to securely open up, to the outside, a service and a capability that are provided by a 3^{rd} generation partnership project (3^{rd} generation partnership project, 3GPP) network function.

10. An application function (application function, AF) network element provides an application layer service for the UE. When providing the service for the UE, the AF has requirements on a QoS policy and a charging (charging) policy, and needs to notify a network. In addition, the AF also needs to obtain application-related information fed back by the core network. The AF may have all functions of the AF defined in 3GPP technical standards (technical standards, TS) release 23.501 R-15, and have a related function used for an application service. In other words, in a user plane architecture, an application server and the UE perform user plane communication through a path of UE-RAN-UPF-AF. The AF may further communicate, in a control plane architecture by using the NEF, with another network function (network function, NF) in a 5G core network (5G core network, 5GC), for example, communicate with the PCF by using the NEF. If the AF is deployed by an operator of a 5GC, the AF may alternatively directly communicate, in the control plane architecture, with another NF in the 5GC without using the NEF, for example, directly communicate with the PCF.

11. An authentication server function (authentication server function, AUSF) network element is mainly responsible for authenticating a user, to determine whether to allow the user or a device to access the network.

12. A network slice selection function (network slice selection function, NSSF) network element is mainly responsible for network slice selection, and determines, based on slice selection assistance information, subscription information, and the like of the UE, a network slice instance that the UE is allowed to access.

13. A network repository function (network repository function, NRF) network element may be configured to: provide a network element discovery function, and provide network element information corresponding to a network element type based on a request of another network element. The NRF further provides network element management services, such as network element registration, update, and deregistration, and network element status subscription and push.

14. A charging function (charging function, CHF) network element mainly provides a charging service and a bandwidth control service. Nchf shown in FIG. 1 is a service-based interface (service-based interface, SBI) of a charging function provided by the CHF network element, and is used by the policy control network element, the session management network element, and the like to implement a charging function and a bandwidth control function. For example, the CHF network element provides a converged charging (Nchf_ConvergedCharging) service and an offline charging (Nchf_OfflineOnlyCharging) service for the session management network element, to implement functions such as rating and quota management. The CHF network element provides a bandwidth control (Nchf_SpendingLimitControl) service for the policy control network element, to complete bandwidth control and change notification.

In FIG. 1, N1, N2, N3, N4, N6, Nnssf, Nnef, Nnrf, Npcf, Nudm, Naf, Nchf, Nausf, Namf, and Nsmf are interface sequence numbers. For meanings of the interface sequence numbers, refer to meanings defined in 3GPP TS 23.501.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the PCF, the UDM, the CHF, the NRF, the AUSF, and the like shown in FIG. 1 may be understood as network elements configured to implement different functions in the core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing networks may still use terms in 5G, or may use other names. The names of the interfaces between the network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

FIG. 2 is a schematic flowchart of interaction between a PCF and a CHF. As shown in FIG. 2, an interaction procedure between the PCF and the CHF may include a subscription interaction procedure (that is, S210 and S220), a notification interaction procedure (that is, S230 and S240), and a subscription delete interaction procedure (S250 and S260). The following describes the interaction procedure between the PCF and the CHF.

S210: The PCF sends a subscription message to the CHF. Correspondingly, the CHF receives the subscription message from the PCF.

For example, the PCF invokes, by using a "POST" request in a hypertext transfer protocol (hypertext transfer protocol, HTTP), a subscriptions (subscriptions) interface provided by an Nchf_bandwidth limit control (Nchf_SpendingLimitControl) service to send the subscription message. The subscription message sent by the PCF may be represented as POST/nchf-spendinglimitcontrol/v1/subscriptions.

The subscription message is used to request the CHF to create a bandwidth control session between the CHF and the PCF. The bandwidth control session corresponds to a session (for example, a data connection session, that is, a session between user equipment and a data network) of a user (or referred to as a terminal device). The subscription message may be further used to request the CHF to create a subscription resource for the session of the user. The subscription message includes a user number and a notification uniform resource identifier (notification uniform resource identifier, notifiUri) information element. An address in the notifiUri information element is used as a destination address for the CHF to subsequently deliver a notification message. For example, a format of the notifiUri information element is notifiUri: http://10.10.10.10:8080/nchf-spendinglimitcontrol/v1/0123456xxxxxxx0.
"http://10.10.10.10:8080" is an authentication part (authority part), and identifies an IP address of a PCF that initiates service invocation and a port number used by the PCF to process a corresponding service. "0123456xxxxxxx0" is information used to determine a session or a resource, for example, the bandwidth control session or the subscription resource.

S220: The CHF sends a subscription response message to the PCF. Correspondingly, the PCF receives the subscription response message from the CHF.

After receiving the subscription message from the PCF, the CHF creates the bandwidth control session based on the subscription message. After completing creation of the session, the CHF sends the subscription response message to the PCF.

For example, the subscription response message sent by the CHF to the PCF is 201 created (201 created).

For more descriptions of the subscription interaction procedure between the PCF and CHF, refer to 3GPP TS 29.594.

S230: The CHF sends the notification message to the PCF. Correspondingly, the PCF receives the notification message from the CHF.

If the PCF needs to change a bandwidth due to service subscription, quota exhaustion, and the like when the user uses a data service, the CHF sends the notification message to the PCF, to notify the PCF to change the bandwidth. The destination address of the notification message is the address in the notifiUri information element included in the subscription message, that is, http://10.10.10.10:8080.

S240: The PCF sends a notification response message to the CHF. Correspondingly, the CHF receives the notification response message from the PCF.

After receiving the notification message from the CHF, the PCF sends the notification response message to the CHF.

For example, the notification response message sent by the PCF to the CHF is 204 no content (204 no content).

For more descriptions of the notification interaction procedure between the PCF and the CHF, refer to 3GPP TS 29.594.

S250: The PCF sends a subscription delete message to the CHF. Correspondingly, the CHF receives the subscription delete message from the PCF.

The subscription delete message indicates to delete the bandwidth control session created by the CHF, in other words, indicates to delete the subscription resource.

For example, the PCF invokes, by using a "delete (DELETE)" request in HTTP, the subscriptions interface provided by the Nchf_SpendingLimitControl service to send the subscription delete message. The subscription delete message sent by the PCF may be represented as DELETE/nchf-spendinglimitcontrol/v1/subscriptions/{subscriptionId}, where "{subscriptionId}" identifies the session or the subscription resource that the PCF indicates to delete.

S260: The CHF sends a subscription delete response message to the PCF. Correspondingly, the PCF receives the subscription delete response message from the CHF.

After deleting the session, the CHF sends the subscription delete response message to the PCF.

For example, the subscription delete response message sent by the CHF to the PCF is 204 no content.

For more descriptions of the subscription delete interaction procedure between the PCF and CHF, refer to 3GPP TS 29.594.

In the entire interaction procedure between the PCF and the CHF, if the PCF is always in a normal working state, the PCF and the CHF can normally interact with each other. If the PCF cannot work normally (for example, the PCF is faulty or is in a breakdown state due to a disaster), the CHF cannot perceive a status of the PCF, and still delivers the notification message based on a callback (callback) address notifiUri provided by the PCF in an initial subscription message. However, because the PCF cannot work normally, the address of the PCF is unreachable. Consequently, the notification message fails to be delivered. When the notification message fails to be delivered, a bandwidth change request of the user cannot be processed in time, and user experience is affected.

Similarly, in a process in which the SMF interacts with the CHF, if the SMF cannot work normally, the CHF cannot deliver the notification message to the SMF. Consequently, the SMF cannot perform related processing on the session of the user in time, and user experience is affected.

In view of this, this application provides a communication method, so that the CHF delivers, in time, the notification message to an alternative network element when a first network element is faulty. In this way, the alternative network element performs a corresponding operation on the session of the user based on second information included in the notification message, to improve user experience.

It should be noted that the charging function network element mentioned in embodiments of this application may be the CHF, the network repository function network element may be an NRF, the policy control network element may be the PCF, and the session management network element may be the SMF.

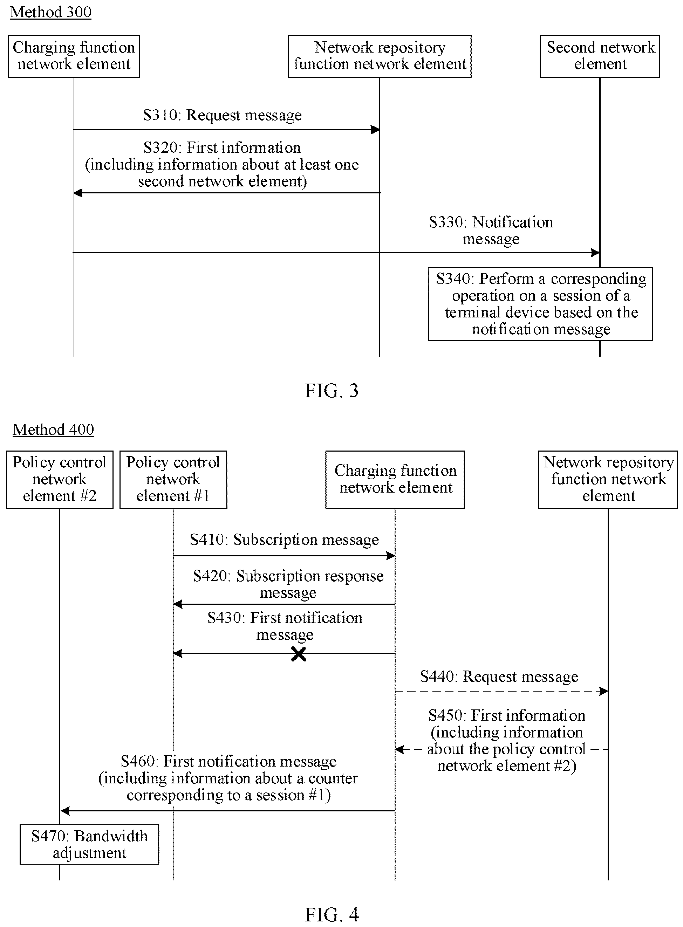

FIG. 3 is a schematic flowchart of a communication method according to an embodiment of this application. As shown in FIG. 3, the method 300 may include the following steps.

S310: A charging function network element sends a request message to a network repository function network element.

Correspondingly, the network repository function network element receives the request message from the charging function network element.

The request message is used to request information about at least one second network element. The at least one second network element is an alternative network element when a first network element is faulty. In other words, each of the at least one second network element has an active/standby relationship with the first network element. Each of the at least one second network element may synchronize a session between the first network element and the charging function network element. In other words, when the first network element establishes a session (for example, a bandwidth control session #1) with the charging function network element, each of the at least one second network element may obtain information about the bandwidth control session #1, for example, a session identifier identifying the bandwidth control session #1 and a session that is of a terminal device and that is associated with the bandwidth control session #1.

Optionally, the request message is further used to request service status information of the first network element, and the service status information of the first network element is used to determine whether the first network element is faulty.

For example, the first network element is a first policy control network element, and the second network element is an alternative second policy control network element of the first policy control network element. Alternatively, the first network element is a first session management network element, and the second network element is an alternative second session management network element of the first session management network element.

The information about the at least one second network element includes address information of the at least one second network element. For example, the address information of the at least one second network element includes an IP address of each of the at least one second network element, or the address information of the at least one second network element includes an IP address and a port number (port number) of each of the at least one second network element.

Optionally, the information about the at least one second network element further includes one or two of the following: priority information of the at least one second network element or capacity information of the at least one second network element. The priority information of the at least one second network element indicates a priority of each of the at least one second network element, and the capacity information of the at least one second network element indicates a capacity of each of the at least one second network element.

The information about the at least one second network element may be registered by the first network element with the network repository function network element. For example, when registering a first service with the network repository function network element, the first network element may provide the information about the at least one second network element. For more descriptions of registering, by the first network element, the information about the at least one second network element with the network repository function network element, refer to descriptions of the following method 600. For brevity, details are not described herein.

Information carried in the request message is not limited in this embodiment of this application.

In a possible implementation, the request message does not carry other information.

For example, after the charging function network element is initially started, after the charging function network element receives a session create request message (for example, the subscription message in S210) from the first network element, or after the charging function network element determines that the first network element is faulty, the charging function network element may send a request message that does not carry other information to the network repository function network element.

In another possible implementation, the request message includes second information that has an association relationship with the information about the at least one second network element, and the second information includes one or more of the following: information about the charging function network element, type information of the first network element, address information of the first network element, information about a terminal device served by the first network element, or information about the first service provided by the first network element.

The information about the charging function network element indicates the charging function network element. The type information of the first network element indicates a type of the first network element, that is, indicates that the first network element is a policy control network element or a session management network element. The address information of the first network element includes an IP address of the first network element, or the address information of the first network element includes an IP address and a port number of the first network element. The information about the terminal device served by the first network element may include one or more of the following: an international mobile subscriber identity (international mobile subscriber identity, IMSI), an international mobile equipment identity (international mobile equipment identity, IMEI), a subscription permanent identifier (subscription permanent identifier, SUPI), a generic public subscription identifier (generic public subscription identifier, GPSI), a medium access control (medium access control, MAC) address, information about a user corresponding to the terminal device, or an IP 5-tuple. The information about the first service provided by the first network element may include a service name of the first service and/or a service identifier (identifier, ID) of the first service. For example, if the service name of the first service is a notification callback (notificallback) service, and the first network element is the policy control network element, the service name of the first service may be an Npcf_notification callback (Npcf_NotificallBack) service. Alternatively, if the first network element is the session management network element, the service name of the first service may be an Nsmf_notification callback (Nsmf_NotifiCallBack) service.

For example, after the charging function network element is initially started, after the charging function network element receives a session create request message from the first network element, or after the charging function network element determines that the first network element is faulty, the request message sent by the charging function network element to the network repository function network element includes the second information. The second information may include one or more of the following: the information about the charging function network element, the type information of the first network element, or the information about the first service.

For another example, after the charging function network element receives a session create request message from the first network element or after the charging function network element determines that the first network element is faulty, the request message sent by the charging function network element to the network repository function network element includes the second information. The second information may include one or more of the following: the information about the charging function network element, the type information of the first network element, the address information of the first network element, the information about the terminal device served by the first network element, or the information about the first service. The charging function network element may obtain, based on the session create request message received from the first network element, the address information of the first network element and/or the information about the terminal device served by the first network element.

The request message sent by the charging function network element to the network repository function network element is not limited in this embodiment of this application.

In a possible implementation, the request message is a subscription request message, and the subscription request message is used to subscribe to the information about the at least one second network element, the subscription request message is used to subscribe to the first service provided by the first network element, or the subscription request message is used to subscribe to service change information of the first service provided by the first network element. For example, the charging function network element may invoke, by using a "POST" request in HTTP, a subscriptions (subscriptions) interface to send the subscription request message.

In another possible implementation, the request message is an instant request message, and the instant request message is used to immediately request the information about the at least one second network element, or the instant request message is used to immediately request the first service provided by the first network element. For example, the charging function network element may invoke a network element discovery request (NF Discovery Request) service to send the instant request message.

S320: The network repository function network element sends first information to the charging function network element.

Correspondingly, the charging function network element receives the first information from the network repository function network element.

The first information includes the information about the at least one second network element.

Optionally, the first information further includes one or more of the following: the information about the first service, the address information of the first network element, the information about the terminal device served by the first network element, capacity information of the first network element, priority information of the first network element, or the service status information of the first network element.

In a possible implementation, the request message does not carry other information. In this case, after the network repository function network element receives the request message from the charging function network element, the network repository function network element may determine that the network repository function network element can provide only the information about the at least one second network element for the charging function network element, or determine that the charging function network element can invoke only the first service, so that the network repository function network element may send the first information to the charging function network element based on the request message.

In another possible implementation, the request message includes the second information. In this case, after receiving the request message from the charging function network element, the network repository function network element may send the first information to the charging function network element based on the second information.

For example, when the second information includes the information about the charging function network element, the network repository function network element may determine, based on the information about the charging function network element, that only the information about the at least one second network element can be provided for a network element indicated by the information about the charging function network element, or determine that a network element indicated by the information about the charging function network element can invoke only the first service. Further, the network repository function network element may send the first information to the charging function network element. Alternatively, when the network repository function network element stores an association relationship between the information about the charging function network element and the information about the at least one second network element, the network repository function network element may send the first information to the charging function network element.

For another example, when the second information includes the type information of the first network element, the network repository function network element may determine the type of the first network element based on the type information of the first network element, and further determine that the request message is used to request information about the alternative network element when the first network element is faulty. Further, the network repository function network element may send the first information to the charging function network element. Alternatively, when the network repository function network element stores an association relationship between the type information of the first network element and the information about the at least one second network element, the network repository function network element may send the first information to the charging function network element.

For another example, the second information includes the address information of the first network element. When the network repository function network element stores an association relationship between the address information of the first network element and the information about the at least one second network element, the network repository function network element may send the first information to the charging function network element.

For another example, when the second information includes the information about the first service, the network repository function network element determines that the charging function network element may invoke the first service. Alternatively, when the network repository function network element stores an association relationship between the information about the first service and the information about the at least one second network element, the network repository function network element may send the first information to the charging function network element.

Optionally, if the request message sent by the charging function network element to the network repository function network element is the subscription request message, after receiving the request message, the network repository function network element may further send a response message to the charging function network element. The response message indicates whether the information about the at least one second network element is successfully subscribed to, indicates whether the first service is successfully subscribed to, or indicates whether the service change information of the first service is successfully subscribed to. For example, the response message may be "201 created", indicating that subscription succeeds. Alternatively, the response message may be "4XX", "5XX", or "3XX", indicating that subscription fails. When the response message is "4XX" or "5XX", the response message may further include a subscription failure cause. For example, the subscription failure cause is that the network repository function network element does not store the information about the at least one second network element.

When the network repository function network element sends the response message to the charging function network element, the response message may include the first information, or the first information is carried in another message different from the response message. This is not limited in this embodiment of this application.

It should be further noted that, when receiving the subscription request message, the network repository function network element may send the first information to the charging function network element in time when the information about the at least one second network element changes or when the first service changes. That the first service changes may include that a service status of the first network element changes. For example, the service status of the first network element changes from normal to faulty, or the service status of the first network element changes from faulty to normal.

Optionally, if the request message sent by the charging function network element to the network repository function network element is the instant request message, the network repository function network element may invoke a network element discovery response (NF Discovery Response) service to send the first information.

S330: The charging function network element sends a notification message to the second network element.

Correspondingly, the second network element receives the notification message from the charging function network element.

The notification message is used to perform a corresponding operation on a session of the terminal device. It should be understood that the terminal device is served by the first network element before the first network element is faulty, and the terminal device is served by the second network element after the first network element is faulty.

For example, the charging function network element may send the notification message to the second network element when a counter (counter) corresponding to the session of the terminal device changes. The notification message includes information about the counter corresponding to the session of the terminal device, and the corresponding operation is adjusting a bandwidth of the session of the terminal device. Optionally, the charging function network element may send the notification message to the second network element when the counter corresponding to the session of the terminal device exceeds a first threshold. The first threshold may be predefined in a protocol or a standard, or may be determined based on a resource usage limit corresponding to the session of the terminal device. For example, if the resource usage limit corresponding to the session of the terminal device is 50M, the first threshold may be 25M.

The counter corresponding to the session of the terminal device is used to trace a consumption status of the terminal device inside the charging function network element. The counter may be a counter of traffic used by the session of the terminal device, a counter of used duration, a counter of a quantity of times of being invoked, or the like. The counter may also be referred to as a policy counter (policy counter).

For example, the charging function network element may send the notification message to the second network element when a charging condition corresponding to the session of the terminal device changes. The notification message includes reauthorization information, and the corresponding operation is initiating a reauthorization charging request for the session of the terminal device.

When the first network element is faulty, the charging function network element sends the notification message to one of the at least one second network element based on the information about the at least one second network element. The notification message corresponds to the session #1 established between the first network element and the charging function network element. In other words, when the first network element is not faulty, the charging function network element sends the communication message to the first network element based on the session #1. If the charging function network element sends the notification message to the first network element, a destination address of the communication message is an IP address #1 and a port number #1 of the first network element, and the IP address #1 and the port number #1 of the first network element correspond to the session #1. In a process of establishing the session #1, the subscription message sent by the first network element to the charging function network element may include the IP address and the port number of the first network element.

Descriptions are provided below by using an example in which the charging function network element sends the notification message to a second network element #1 in the at least one second network element. The second network element #1 is any one of the at least one second network element. Alternatively, when the first network element receives the priority information of the at least one second network element, the second network element #1 may be a second network element with a highest priority in the at least one second network element. Alternatively, when the first network element receives the capacity information of the at least one second network element, the second network element #1 may be a second network element with a largest capacity in the at least one second network element.

An address of the notification message sent by the charging function network element to the second network element #1 is an address of the second network element #1. As described above, if address information of the second network element #1 received by the charging function network element includes an IP address and a port number of the second network element #1, the charging function network element uses the IP address and the port number of the second network element #1 as the destination address of the notification message. It should be noted that, when the charging function network element receives at least one IP address and at least one port number of the second network element #1, the charging function network element determines the destination address of the notification message based on an IP address that is in the at least one IP address of the second network element #1 and that is associated with an IP address #1 of a first network element #1, and a port number that is in the at least one port number of the second network element #1 and that is associated with a port number #1 of the first network element #1. If the address information of the second network element #1 received by the charging function network element includes the IP address of the second network element #1, the charging function network element uses the IP address of the second network element #1 and the port number of the first network element as the destination address of the notification message. It should be noted that when the charging function network element receives the at least one IP address of the second network element #1, the charging function network element determines the destination address of the notification message based on the IP address that is in the at least one IP address of the second network element #1 and that is associated with the IP address #1 of the first network element #1, and the port number #1 of the first network element #1. As described above, the second network element #1 may synchronize the session #1 between the first network element and the charging function network element. Therefore, the IP address that is in the at least one IP address of the second network element #1 and that is associated with the IP address #1 of the first network element corresponds to the session #1, and the port number that is in the at least one port number of the second network element #1 and that is associated with the port number #1 of the first network element corresponds to the session #1.

A manner in which the charging function network element determines that the first network element is faulty is not limited in this embodiment of this application.

In a possible implementation, if the charging function network element fails to send the notification message to the first network element, or a quantity of times that the charging function network element fails to send the notification message to the first network element reaches N, the charging function network element determines that the first network element is faulty. N is a positive integer.

In another possible implementation, if the request message is further used to request the service status information of the first network element, the first information may include the service status information of the first network element, and the charging function network element may further determine, based on the service status information of the first network element, that the first network element is faulty.

In still another possible implementation, if the request message is the subscription request message, the network repository function network element may send the service status information of the first network element to the charging function network element when the service status of the first network element changes, for example, the first network element changes from normal to faulty, and the charging function network element may further determine, based on the service status information, that the first network element is faulty.

S340: The second network element performs a corresponding operation on the session of the terminal device based on the second information.

After receiving the notification message from the charging function network element, the second network element determines, based on a session identifier in a delivery address of the notification message, that the second information is used to perform a corresponding operation on the session of the terminal device. The session identifier in the delivery address of the notification message is used to determine the session between the first network element and the charging function network element, and the session between the first network element and the charging function network element corresponds to the session of the terminal device.

For more descriptions of how the second network element performs a corresponding operation on the session of the terminal device based on the second information, refer to the following method 400 and method 500.

Optionally, after the first network element is restored to normal, if the charging function network element needs to send a new notification message, the charging function network element may send the new notification message to the first network element.

In this embodiment of this application, the charging function network element may receive the information about the at least one second network element from the network repository function network element, where the at least one second network element is the alternative network element when the first network element is faulty. Further, when the first network element is faulty, the charging function network element may send the notification message to one of the at least one second network element, to notify the second network element to perform a corresponding operation on the session of the terminal device, and ensure that the session of the terminal device continues, so as to ensure user experience.

In addition, according to the method provided in this application, the second network element does not need to send an update notification to the charging function network element when the first network element is faulty, to send address information of the second network element to the charging function network element, thereby avoiding a message signaling storm caused by a full update request initiated by the second network element.

According to the method in FIG. 3, with reference to FIG. 4, the following describes, by using an example in which the first network element is a policy control network element #1 and the second network element is a policy control network element #2, the communication method provided in embodiments of this application.

FIG. 4 is a schematic flowchart of a communication method according to an embodiment of this application. As shown in FIG. 4, the method 400 may include the following steps.

S410: A policy control network element #1 sends a subscription message to a charging function network element.

Correspondingly, the charging function network element receives the subscription message from the policy control network element #1.

The subscription message is used to request the charging function network element to create a bandwidth control session #1 for a terminal device #1, and the subscription message includes an IP address #1 and a port number #1 that are of the policy control network element #1 and that are invoked by the policy control network element #1 to initiate a bandwidth control service (in other words, the bandwidth control session #1). For example, the IP address #1 of the policy control network element #1 is "10.10.10.10", and the port number #1 of the policy control network element #1 is "8080".

The bandwidth control session #1 corresponds to a session #1 of the terminal device #1 served by the policy control network element #1.

For more descriptions of S410, refer to S210.

S420: The charging function network element sends a subscription response message to the policy control network element #1.

Correspondingly, the policy control network element #1 receives the subscription response message from the charging function network element.

For more descriptions of S420, refer to S220.

Optionally, the method 400 further includes S430.

S430: The charging function network element fails to send a first notification message to the policy control network element #1.

For example, if a counter corresponding to the session #1 of the terminal device changes, or a counter corresponding to the session #1 of the terminal device exceeds a first threshold, the charging function network element may send the first notification message to the policy control network element #1. For descriptions of the first threshold, refer to S330 in the foregoing method 300.

When the charging function network element fails to send the first notification message to the policy control network element #1, the charging function network element determines that the policy control network element #1 is faulty.

It should be noted that, before S430 is performed, if the charging function network element receives service status information of the policy control network element #1 from a network repository function network element, and the charging function network element determines, based on the service status information of the policy control network element #1, that the policy control network element #1 is faulty, S430 may not be performed in the method 400.

Optionally, the method 400 further includes S440 and S450.

S440: The charging function network element sends a request message to the network repository function network element.

Correspondingly, the network repository function network element receives the request message from the charging function network element.

The request message may include second information, and the second information includes one or more of the following: information about the charging function network element, type information of the policy control network element #1, address information of the policy control network element #1 (including the IP address #1 and/or the port number #1 of the policy control network element #1), information about the terminal device #1, or information about a first service.

For more descriptions of S440, refer to S310 in the foregoing method 300.

S450: The network repository function network element sends first information to the charging function network element.

Correspondingly, the charging function network element receives the first information from the network repository function network element.

The first information includes information about an alternative network element (namely, a policy control network element #2) when the policy control network element #1 is faulty. For example, the information about the policy control network element #2 includes an IP address #2 of the policy control network element #2, or includes an IP address #2 and a port number #2 of the policy control network element #2. The IP address #2 of the policy control network element #2 is associated with the IP address #1 of the policy control network element #1. In other words, the IP address #2 of the policy control network element #2 is an IP address invoked by the policy control network element #2 for the bandwidth control session #1. The port number #2 of the policy control network element #2 is associated with the port number #1 of the policy control network element #1. In other words, the port number #2 of the policy control network element #2 is a port number invoked by the policy control network element #2 for the bandwidth control session #1. For example, the IP address #2 of the policy control network element #2 is "20.20.20.20", and the port number #2 of the policy control network element #2 is "8080".

For more descriptions of S450, refer to S320 in the foregoing method 300.

It should be noted that, before S440 and S450 are performed, if the charging function network element determines, by querying a local cache, that the charging function network element stores the information about the policy control network element #2, S440 and S450 may not be performed in the method 400. For example, the charging function network element may query the local cache based on the IP address #1 and/or the port number #1 of the policy control network element #1. If the local cache of the charging function network element stores information about a network element associated with the IP address #1 and/or the port number #1 of the policy control network element #1, the charging function network element determines that the information about the network element is the information about the policy control network element #2.

S460: The charging function network element sends the first notification message to the policy control network element #2.

Correspondingly, the policy control network element #2 receives the first notification message from the charging function network element.

For example, if the charging function network element obtains the IP address #2 and the port number #2 of the policy control network element #2, the charging function network element sends the first notification message to the policy control network element #2 based on the IP address #2 and the port number #2 of the policy control network element #2. For example, a delivery address of the first notification message sent by the charging function network element to the policy control network element #2 is http://20.20.20.20:8080/nchf-spendinglimitcontrol/v1/0123456xxxxxxx0. "20.20.20.20:8080" is the IP address #2 and the port number #2 of the policy control network element #2, and "0123456xxxxxxx0" is used to uniquely determine the bandwidth control session #1.

For example, if the charging function network element obtains the IP address #2 of the policy control network element #2, the charging function network element sends the first notification message to the policy control network element #2 based on the IP address #2 of the policy control network element #2 and the port number #1 of the policy control network element #1. For example, a delivery address of the first notification message sent by the charging function network element to the policy control network element #2 is http://20.20.20.20:8080/nchf-spendinglimitcontrol/v1/0123456xxxxxxx0. "20.20.20.20" is the IP address #2 of the policy control network element #2, and "8080" is the port number #1 of the policy control network element #1.

The first notification message includes information about the counter corresponding to the session #1 of the terminal device. For example, the information about the counter includes one or two of the following: a policy counter identifier (policyCounterId) or a current status (currentStatus). policyCounterId is an identifier agreed on by the policy control network element #1 and the charging function network element, and identifies a counter, or indicates a resource of the terminal device #1, for example, package traffic signed or subscribed to by the terminal device #1. currentStatus corresponds to a current status of the counter indicated by policyCounterId. For example, if a value of currentStatus is 50, it indicates that the counter indicated by policyCounterId is 50% of a usage limit. Alternatively, if a value of currentStatus is 100, it indicates that the counter indicated by policyCounterId is 100% of a usage limit. The usage limit is a usage limit of a resource or traffic corresponding to the session #1 of the terminal device.

S470: The policy control network element #2 performs bandwidth adjustment.

After receiving the first notification message from the charging function network element, the policy control network element #2 determines the bandwidth control session #1 based on an identifier that is in the delivery address of the first notification message and that identifies the bandwidth control session #1. Further, the policy control network element #2 determines to perform, based on the information about the counter in the first notification message, bandwidth adjustment on the session #1 of the terminal device #1 corresponding to the bandwidth control session #1.

That the policy control network element #2 performs bandwidth adjustment on the session #1 of the terminal device #1 includes: reducing a rate of the session #1 of the terminal device #1 (that is, reducing a bandwidth of the session #1 of the terminal device #1) or increasing a rate of the session #1 of the terminal device #1 (that is, increasing a bandwidth of the session #1 of the terminal device #1). For example, if the policy control network element #2 determines, based on the second information, that the counter corresponding to the session #1 of the terminal device #1 is 50% of the usage limit, the policy control network element #2 may reduce the rate of the session #1 of the terminal device #1. For another example, if the policy control network element #2 determines, based on the information about the counter, that the terminal device #1 subscribes to new package traffic (that is, the policy control network element #2 determines that the counter corresponding to the session of the terminal device is 0), the policy control network element #2 may perform increase the rate of the session #1 of the terminal device.

Optionally, after S470, if the charging function network element needs to send a new notification message, and the charging function network element determines, based on the service status information of the policy control network element #1, that the policy control network element #1 is restored to normal, the charging function network element may send the new notification message to the policy control network element #1.

In this embodiment of this application, the charging function network element may receive the information about the policy control network element #2 from the network repository function network element, where the policy control network element #2 is the alternative network element when the policy control network element #1 is faulty. Further, the charging function network element may send the first notification message to the policy control network element #2 when the policy control network element #1 is faulty, so that the policy control network element #2 performs bandwidth adjustment on the session of the terminal device in time based on the first notification message, a bandwidth of the terminal device is changed in time, and tariff is switched in time.

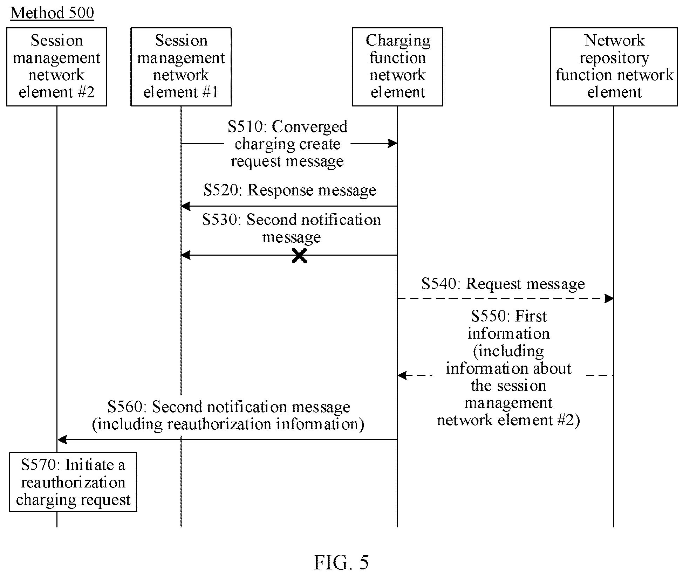

According to the method in FIG. 3, with reference to FIG. 5, the following describes, by using an example in which the first network element is a session management network element #1 and the second network element is a session management network element #2, the communication method provided in embodiments of this application.

FIG. 5 is a schematic flowchart of a communication method according to an embodiment of this application. As shown in FIG. 5, the method 500 may include the following steps.

S510: A session management network element #1 sends a converged charging create request message to a charging function network element.

Correspondingly, the charging function network element receives the converged charging create request message from the session management network element #1.

The converged charging create request message is used to request the charging function network element to create a charging session #1 for a terminal device #1. The converged charging create request message includes an IP address #1 and a port number #1 that are of the session management network element #1 and that are invoked by the session management network element #1 to initiate a converged charging (converged charging) service (in other words, the charging session #1). For example, the converged charging create request message includes a notifiUri information element, and an address in the notifiUri information element is used as a destination address for subsequently delivering a second notification message by the charging function network element. For example, a format of the notifiUri information element is http://10.10.10.10:8080/nchf-convergedcharging/notify/v2/chargingdata/0890b418120f089410. "http://10.10.10.10:8080" is an authentication part, and identifies the IP address #1 of the session management network element #1 that initiates service invocation and a port number #1 used to process a corresponding service. "0890b418120f089410" is used to determine the charging session #1.

The charging session #1 corresponds to a session #1 of the terminal device #1 served by the session management network element #1.

For example, the session management network element #1 sends the converged charging create request message to the charging function network element by invoking an Nchf converged charging create request (Nchf_ConvergedCharging_Create request) service.

S520: The charging function network element sends a response message to the session management network element #1.

Correspondingly, the session management network element #1 receives the response message from the charging function network element.

After completing creation of the charging session #1, the charging function network element sends the response message to the session management network element. For example, the response message sent by the charging function network element to the session management network element is 201 created.

Optionally, the method 500 further includes S530.

S530: The charging function network element fails to send the second notification message to the session management network element #1.

For example, when a charging condition of the terminal device #1 changes due to service subscription, recharge, balance exhaustion, a user status change, and the like, the charging function network element may send the second notification message to the session management network element #1.

When the charging function network element fails to send the second notification message to the session management network element #1, the charging function network element determines that the session management network element #1 is faulty.

It should be noted that, before S530 is performed, if the charging function network element receives service status information of the session management network element #1 from a network repository function network element, and the charging function network element determines, based on the service status information of the session management network element #1, that the session management network element #1 is faulty, S530 may not be performed in the method 500.

Optionally, the method 500 further includes S540 and S550.

S540: The charging function network element sends a request message to the network repository function network element.

Correspondingly, the network repository function network element receives the request message from the charging function network element.

The request message may include second information, and the second information includes one or more of the following: information about the charging function network element, type information of the session management network element #1, address information of the session management network element #1 (including the IP address #1 and/or the port number #1 of the session management network element #1), information about the terminal device #1, or information about a first service.

For more descriptions of S540, refer to S310 in the foregoing method 300.

S550: The network repository function network element sends first information to the charging function network element.

Correspondingly, the charging function network element receives the first information from the network repository function network element.

The first information includes information about an alternative network element (namely, a session management network element #2) when the session management network element #1 is faulty. For example, the information about the session management network element #2 includes an IP address #2 of the session management network element #2, or includes an IP address #2 and a port number #2 of the session management network element #2. The IP address #2 of the session management network element #2 is associated with the IP address #1 of the session management network element #1. In other words, the IP address #2 of the session management network element #2 is an IP address invoked by the session management network element #2 for the charging session #1. The port number #2 of the session management network element #2 is associated with the port number #1 of the session management network element #1. In other words, the port number #2 of the session management network element #2 is a port number invoked by the session management network element #2 for the charging session #1. For example, the IP address #2 of the session management network element #2 is "20.20.20.20", and the port number #2 of the session management network element #2 is "8080".

For more descriptions of S550, refer to S320 in the foregoing method 300.

It should be noted that, before S540 and S550 are performed, if the charging function network element determines, by querying a local cache, that the charging function network element stores the information about the session management network element #2, S540 and S550 may not be performed in the method 500. For example, the charging function network element may query the local cache based on the IP address #1 and/or the port number #1 of the session management network element #1. If the local cache of the charging function network element stores information about a network element associated with the IP address #1 and/or the port number #1 of the session management network element #1, the charging function network element determines that the information about the network element is the information about the session management network element #2.

S560: The charging function network element sends the second notification message to the session management network element #2.

Correspondingly, the session management network element #2 receives the second notification message from the charging function network element.

For example, if the charging function network element obtains the IP address #2 and the port number #2 of the session management network element #2, the charging function network element sends the second notification message to the session management network element #2 based on the IP address #2 and the port number #2 of the session management network element #2. For example, a delivery address of a notification message sent by the charging function network element to the session management network element #2 is http://20.20.20.20:8080/nchf-convergedcharging/notify/v2/chargingdata/0890b418120f089410. "20.20.20.20:8080" is the IP address #2 and the port number #2 of the session management network element #2, and "0890b418120f089410" is used to uniquely determine the charging session #1.

For example, if the charging function network element obtains the IP address #2 of the session management network element #2, the charging function network element sends the second notification message to the session management network element #2 based on the IP address #2 of the session management network element #2 and the port number #1 of the session management network element #1. For example, a delivery address of the second notification message sent by the charging function network element to the session management network element #2 is http://20.20.20.20:8080/nchf-convergedcharging/notify/v2/chargingdata/0890b418120f089410. "20.20.20.20" is the IP address #2 of the session management network element #2, and "8080" is the port number #1 of the session management network element #1.

The second notification message includes reauthorization information. For example, the second notification message includes a notification type (notification type), and a value of the notification type is reauthorization (reauthorization).

It should be noted that, when a charging condition of the terminal device #1 changes due to service subscription, recharge, balance exhaustion, a user status change, and the like, the charging function network element may send the second notification message to the session management network element #2.

S570: The session management network element #2 initiates a reauthorization charging request.

After receiving the second notification message from the charging function network element, the session management network element #2 determines the charging session #1 based on an identifier that is in the delivery address of the second notification message and that identifies the charging session #1. Further, the session management network element #2 determines to initiate, based on the second information in the second notification message, the reauthorization charging request for a session #1 of the terminal device #1 corresponding to the charging session #1.

That the session management network element #2 initiates the reauthorization charging request includes: The session management network element #2 sends a charging update request message to the charging function network element, to request the charging function network element to charge usage (usage) that is generated by the terminal device #1 and apply for a new quota for the terminal device #1. Correspondingly, the charging function network element may apply a new package resource to a subsequent service of the terminal device #1 based on the charging update request message.

Optionally, after S570, if the charging function network element needs to send a new notification message, and the charging function network element determines, based on the service status information of the session management network element #1, that the session management network element #1 is restored to normal, the charging function network element may send the new notification message to the session management network element #1.

In this embodiment of this application, the charging function network element may receive the information about the session management network element #2 from the network repository function network element, where the session management network element #2 is the alternative network element when the session management network element #1 is faulty. Further, the charging function network element may send the second notification message to the session management network element #2 when the session management network element #1 is faulty, so that the session management network element #2 initiates the reauthorization charging request in time based on the second notification message. Therefore, the charging function network element applies the new package resource to the service of the terminal device in time based on the reauthorization charging request, to improve user experience and avoid inaccurate charging.

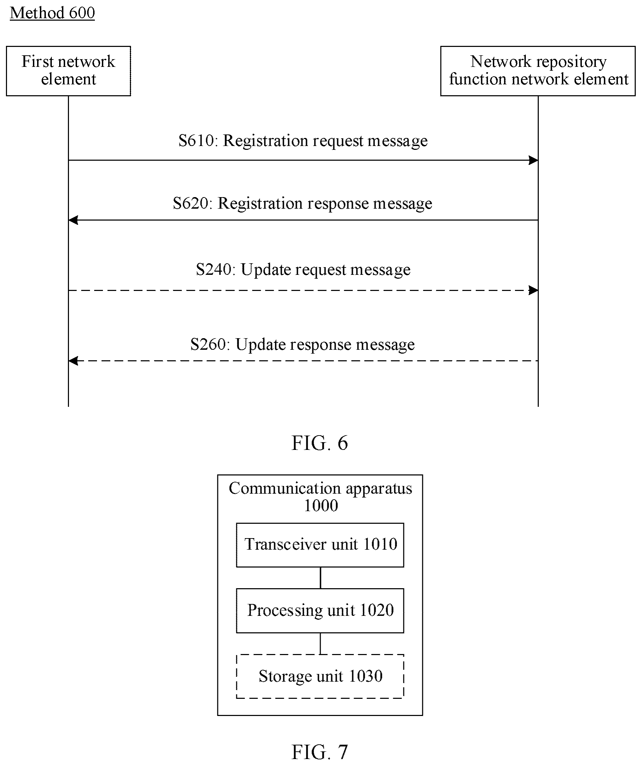

The following describes, with reference to FIG. 6, a method in which a first network element registers information about at least one second network element with a network repository function network element.

FIG. 6 is a schematic flowchart of a communication method according to an embodiment of this application. As shown in FIG. 6, the method 600 may include the following steps.

S610: A first network element sends a registration request message to a network repository function network element.

Correspondingly, the network repository function network element receives the registration request message from the first network element.

For example, the first network element registration request message is used to register information about at least one second network element, and the at least one second network element is an alternative network element when the first network element is faulty. Alternatively, the registration request message is used to register a first service provided by the first network element. For the information about the at least one second network element, refer to the descriptions in S310 in the foregoing method 300.

The registration request message includes the information about the at least one second network element. Optionally, the registration request message further includes one or more of the following: information about the first service, address information of the first network element, type information of a network element that is allowed to use the first service, priority information of the first network element, capacity information of the first network element, service status information of the first network element, or information about a terminal device served by the first network element.

For more descriptions of the information about the first service, the address information of the first network element, the service status information of the first network element, and the information about the terminal device served by the first network element, refer to S310 in the foregoing method 300. The type information of the network element that is allowed to use the first service indicates the network element that is allowed to use the first service. The priority information of the first network element indicates a priority of the first network element, and the capacity information of the first network element indicates a capacity of the first network element.

For example, a service name of the first service may be carried in a "service name (serviceName)" parameter included in the registration request message. For example, a value of the "serviceName" parameter is "Npcf_NotifiCallBack" or "Nsmf_NotificallBack".

The address information of the first network element may be carried in an "IP endpoints (ipEndPoints)" parameter included in the registration request message. For example, "ipEndPoints" includes an IPv4 address (IPv4 address) and a "port (port)", respectively indicating an IP address and a port number of the first network element.

The priority information of the first network element and priority information of the at least one second network element may be carried in a "priority (priority)" parameter included in the registration request message.

The capacity information of the first network element and capacity information of the at least one second network element may be carried in a "capacity (capacity)" parameter included in the registration request message.

The type information of the network element that is allowed to use the first service may be carried in an "allowed network element types (allowedNFTypes)" parameter included in the registration request message. For example, a value of the "allowedNF Types" parameter is CHF, identifying that the first service provided by the first network element allows CHF consumption discovery.

Address information of the at least one second network element may be carried in a "network element set identifier list (nfSetIdList)" parameter or a "network element service set identifier list (nfServiceSetIdList)" parameter included in the registration request message. If the address information of the at least one second network element is carried in the "nfSetIdList" parameter, the address information of the at least one second network element includes an IP address of each of the at least one second network element, and "nfSetIdList" further includes an IP address that is of the first network element and that is associated with the IP address of the second network element. If the address information of the at least one second network element is carried in the "nfServiceSetIdList" parameter, the address information of the at least one second network element includes an IP address and a port number of each of the at least one second network element, and the "nfSetIdList" further includes an IP address that is of the first network element and that is associated with the IP address of the second network element, and a port number that is of the first network element and that is associated with the port number of the second network element.

It should be understood that a first network element and a second network element that are identified by IP addresses in a same "nfSetIdList" have an active-standby relationship. If the first network element is faulty, the second network element may replace the first network element to work. If the second network element is faulty, the first network element may replace the second network element to work. First services provided by a first network element and a second network element that are identified by IP addresses and port numbers in a same "nfServiceSetIdList" have an alternative relationship. For example, the "nfServiceSetIdList" parameter includes "10.10.10.10:8080" and "20.20.20.20:8080", "10.10.10.10:8080" is the IP address and the port number of the first network element, and "20.20.20.20:8080" is the IP address and the port number of the second network element. If the first service provided by the first network element based on "10.10.10.10:8080" is faulty, the service provided by the second network element based on "20.20.20.20:8080" replaces the first service provided by the first network element based on "10.10.10.10:8080".

After receiving the registration request message, the network repository function network element stores the information included in the registration request message.

S620: The network repository function network element sends a registration response message to the first network element.

Correspondingly, the first network element receives the registration response message from the network repository function network element.

Optionally, the method 600 further includes S630 and S640.

S630: The first network element sends an update request message to the network repository function network element.

Correspondingly, the network repository function network element receives the update request message from the first network element.

If the information about the at least one second network element changes, for example, a second network element in the at least one second network element is no longer used as the alternative network element when the first network element is faulty, or if a service status of the first network element changes, for example, the service status of the first network element changes from normal to faulty, or the service status of the first network element changes from faulty to normal, the first network element may send the update request message to the repository function network element, to update the information about the at least one second network element, or update the first service.

The update request message may include one or more of the following: the information about the at least one second network element, the information about the first service, the address information of the first network element, the type information of the network element that is allowed to use the first service, the priority information of the first network element, the capacity information of the first network element, the service status information of the first network element, or identification information of the terminal device served by the first network element. Optionally, the update request message may include updated information. For example, when the service status of the first network element changes, the update request message includes the service status information of the first network element. For another example, if a second network element in the at least one second network element is no longer used as the alternative network element when the first network element is faulty, the update request message may include information about a second network element that is in the at least one second network element and that is still used as the alternative network element when the first network element is faulty.

S640: The network repository function network element sends an update response message to the first network element.

Correspondingly, the first network element receives the update response message from the network repository function network element.

In this embodiment of this application, the first network element registers the information about the at least one second network element with the network repository function network element, or registers the first service with the network repository function network element, so that the charging function network element obtains the information about the at least one second network element from the network repository function network element. Further, when the first network element is faulty, the charging function network element may send a notification message to one of the at least one second network element based on the information about the at least one second network element, to notify the second network element to perform a corresponding operation on a session of the terminal device, so as to ensure user experience.

The foregoing describes the methods in embodiments of this application in detail with reference to FIG. 3 to FIG. 6. The following describes apparatuses in embodiments of this application in detail with reference to FIG. 7 to FIG. 9. It should be noted that the apparatuses shown in FIG. 7 to FIG. 9 may implement the steps in the foregoing methods. For brevity, details are not described herein again.

FIG. 7 is a block diagram of a communication apparatus 1000 according to an embodiment of this application. As shown in FIG. 7, the communication apparatus 1000 may include a transceiver unit 1010 and a processing unit 1020.

In a possible design, the communication apparatus 1000 may be the first network element in the foregoing method embodiments, or may be a chip configured to implement functions of the first network element in the foregoing method embodiments.

It should be understood that the communication apparatus 1000 may correspond to the first network element in the method 300, the method 400, the method 500, or the method 600 in embodiments of this application. The communication apparatus 1000 may include units configured to perform a method performed by the first network element in the method 300 in FIG. 3, the method 400 in FIG. 4, the method 500 in FIG. 5, or the method 600 in FIG. 6. In addition, the units in the communication apparatus 1000 and the foregoing other operations and/or functions are respectively used to implement corresponding procedures of the method 300 in FIG. 3, the method 400 in FIG. 4, the method 500 in FIG. 5, or the method 600 in FIG. 6. It should be understood that a specific process in which the units perform the foregoing corresponding steps is described in detail in the foregoing method embodiments. For brevity, details are not described herein again.

In another possible design, the communication apparatus 1000 may be the second network element in the foregoing method embodiments, or may be a chip configured to implement functions of the second network element in the foregoing method embodiments.

It should be understood that the communication apparatus 1000 may correspond to the second network element in the method 300, the method 400, or the method 500 in embodiments of this application. The communication apparatus 1000 may include units configured to perform a method performed by the second network element in the method 300 in FIG. 3, the method 400 in FIG. 4, or the method 500 in FIG. 5. In addition, the units in the communication apparatus 1000 and the foregoing other operations and/or functions are respectively used to implement corresponding procedures of the method 300 in FIG. 3, the method 400 in FIG. 4, or the method 500 in FIG. 5. It should be understood that a specific process in which the units perform the foregoing corresponding steps is described in detail in the foregoing method embodiments. For brevity, details are not described herein again.

In another possible design, the communication apparatus 1000 may be the charging function network element in the foregoing method embodiments, or may be a chip configured to implement functions of the charging function network element in the foregoing method embodiments.

It should be understood that the communication apparatus 1000 may correspond to the charging function network element in the method 300, the method 400, or the method 500 in embodiments of this application. The communication apparatus 1000 may include units configured to perform a method performed by the charging function network element in the method 300 in FIG. 3, the method 400 in FIG. 4, or the method 500 in FIG. 5. In addition, the units in the communication apparatus 1000 and the foregoing other operations and/or functions are respectively used to implement corresponding procedures of the method 300 in FIG. 3, the method 400 in FIG. 4, or the method 500 in FIG. 5. It should be understood that a specific process in which the units perform the foregoing corresponding steps is described in detail in the foregoing method embodiments. For brevity, details are not described herein again.

In another possible design, the communication apparatus 1000 may be the network repository function network element in the foregoing method embodiments, or may be a chip configured to implement functions of the network repository function network element in the foregoing method embodiments.

It should be understood that the communication apparatus 1000 may correspond to the network repository function network element in the method 300, the method 400, the method 500, or the method 600 in embodiments of this application. The communication apparatus 1000 may include units configured to perform a method performed by the network repository function network element in the method 300 in FIG. 3, the method 400 in FIG. 4, the method 500 in FIG. 5, or the method 600 in FIG. 6. In addition, the units in the communication apparatus 1000 and the foregoing other operations and/or functions are respectively used to implement corresponding procedures of the method 300 in FIG. 3, the method 400 in FIG. 4, the method 500 in FIG. 5, or the method 600 in FIG. 6. It should be understood that a specific process in which the units perform the foregoing corresponding steps is described in detail in the foregoing method embodiments. For brevity, details are not described herein again.

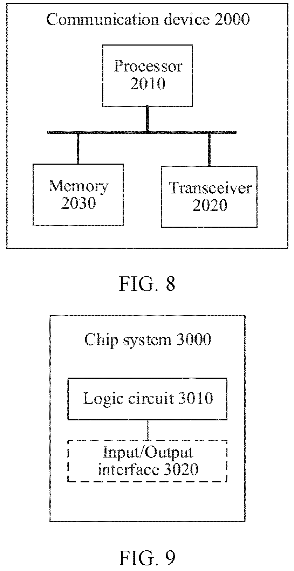

It should be further understood that the transceiver unit 1010 in the communication apparatus 1000 may correspond to a transceiver 2020 in a communication device 2000 shown in FIG. 8, and the processing unit 1020 in the communication apparatus 1000 may correspond to a processor 2010 in the communication device 2000 shown in FIG. 8.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus further includes a storage unit 1030, and the storage unit 1030 is configured to store instructions.

FIG. 8 is a block diagram of a communication device 2000 according to an embodiment of this application. As shown in FIG. 8, the communication device 2000 includes at least one processor 2010 and a transceiver 2020. The processor 2010 is coupled to a memory, and is configured to execute instructions stored in the memory, to control the transceiver 2020 to send a signal and/or receive a signal. Optionally, the communication device 2000 further includes a memory 2030, configured to store instructions.

It should be understood that the processor 2010 and the memory 2030 may be combined into one processing apparatus. The processor 2010 is configured to execute program code stored in the memory 2030 to implement the foregoing functions. During specific implementation, the memory 2030 may alternatively be integrated into the processor 2010, or may be independent of the processor 2010.

It should be further understood that the transceiver 2020 may include a receiver (or referred to as a receiver machine) and a transmitter (or referred to as a transmitter machine). The transceiver 2020 may further include an antenna, and there may be one or more antennas. The transceiver 2020 may alternatively be an antenna interface or an interface circuit.

When the communication device 2000 is a chip, the chip includes a transceiver unit and a processing unit. The transceiver unit may be an input/output circuit or a communication interface. The processing unit may be a processor, a microprocessor, or an integrated circuit integrated on the chip.

FIG. 9 is a diagram of a chip system according to an embodiment of this application. The chip system herein may alternatively be a system including a circuit. The chip system 3000 shown in FIG. 9 includes a logic circuit 3010 and an input/output interface (input/output interface) 3020. The logic circuit is configured to: be coupled to the input interface, and transmit data through the input/output interface, to perform the method in FIG. 3, FIG. 4, FIG. 5, or FIG. 6.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods may be implemented by using a hardware integrated logic circuit in the processor or by using instructions in a form of software. The steps in the methods disclosed with reference to embodiments of this application may be performed and completed by a hardware processor, or may be performed and completed by a combination of hardware in the processor and a software module. The software module may be located in a mature storage medium in the art, for example, a random access register, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In the implementation process, the steps in the foregoing method embodiments may be implemented by using the hardware integrated logic circuit in the processor or by using the instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

According to the methods provided in embodiments of this application, this application further provides a computer program product. The computer program product includes computer program code. When the computer program code is run on a computer, the computer is enabled to perform the method in any one of the embodiments shown in FIG. 3, FIG. 4, FIG. 5, and FIG. 6.

According to the methods provided in embodiments of this application, this application further provides a computer-readable storage medium. The computer-readable storage medium stores program code. When the program code is run on a computer, the computer is enabled to perform the method in any one of the embodiments shown in FIG. 3, FIG. 4, FIG. 5, and FIG. 6.

According to the methods provided in embodiments of this application, this application further provides a system. The system includes the charging function network element, the network repository function network element, and the second network element. Optionally, the system further includes the first network element.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer instructions are loaded and executed on a computer, all or some of the procedures or functions in embodiments of this application are generated. The computer instructions may be stored in a computer-readable storage medium or transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In several embodiments mentioned in this application, it should be understood that the disclosed system, apparatus, and method may be implemented in other manners. For example, the described apparatus embodiments are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a charging function network element, a request message to a network repository function network element, wherein the request message is used to request information about at least one second network element, the at least one second network element is an alternative network element when a first network element is faulty, and the information about the at least one second network element comprises address information of the at least one second network element;
receiving, by the charging function network element, first information from the network repository function network element, wherein the first information comprises the information about the at least one second network element; and
sending, by the charging function network element, a notification message to one of the at least one second network element based on the information about the at least one second network element, wherein the notification message is used to perform a corresponding operation on a session of a terminal device, and the terminal device is served by the first network element before the first network element is faulty.

2. The method according to claim 1, wherein the second network element is a policy control function network element, the notification message comprises information about a counter corresponding to the session of the terminal device, and the corresponding operation is adjusting a bandwidth of the session of the terminal device; or
the second network element is a session management function network element, the notification message comprises reauthorization information, and the corresponding operation is initiating a reauthorization charging request for the session of the terminal device.

3. The method according to claim 1 or 2, wherein the request message comprises second information that has an association relationship with the information about the at least one second network element, and the second information comprises one or more of the following: type information of the charging function network element, type information of the first network element, address information of the first network element, information about the terminal device, or information about a first service provided by the first network element.

4. The method according to any one of claims 1 to 3, wherein the information about the at least one second network element further comprises priority information of the at least one second network element; and the sending, by the charging function network element, a notification message to one of the at least one second network element based on the information about the at least one second network element comprises:
sending, by the charging function network element based on the information about the at least one second network element, the notification message to a second network element with a highest priority in the at least one second network element.

5. The method according to any one of claims 1 to 4, wherein the information about the at least one second network element further comprises capacity information of the at least one second network element; and the sending, by the charging function network element, a notification message to one of the at least one second network element based on the information about the at least one second network element comprises:
sending, by the charging function network element based on the information about the at least one second network element, the notification message to a second network element with a largest capacity in the at least one second network element.

6. The method according to any one of claims 1 to 5, wherein the method further comprises:
when the charging function network element fails to send the notification message to the first network element, determining, by the charging function network element, that the first network element is faulty.

7. The method according to any one of claims 1 to 5, wherein the request message is further used to request service status information of the first network element, and the service status information is used to determine whether the first network element is faulty; and the method further comprises:
receiving, by the charging function network element, the service status information from the network repository function network element; and
determining, by the charging function network element based on the service status information, that the first network element is faulty.

8. The method according to any one of claims 1 to 5, wherein the request message is further used to request service status information of the first network element, the service status information is used to determine whether the first network element is faulty, and the first information further comprises the service status information; and the method further comprises:
determining, by the charging function network element based on the service status information, that the first network element is faulty.

9. The method according to any one of claims 1 to 8, wherein the address information of the at least one second network element comprises an internet protocol IP address of each of the at least one second network element; or
the address information of the at least one second network element comprises an IP address of each of the at least one second network element and a port number for providing a service for the session of the terminal device.

10. A communication method, comprising:
receiving, by a network repository function network element, a request message from a charging function network element, wherein the request message is used to request information about at least one second network element, the at least one second network element is an alternative network element when a first network element is faulty, and the information about the at least one second network element comprises address information of the at least one second network element; and
sending, by the network repository function network element, first information to the charging function network element, wherein the first information comprises the information about the at least one second network element.

11. The method according to claim 10, wherein the request message comprises second information that has an association relationship with the information about the at least one second network element, and the second information comprises one or more of the following: type information of the charging function network element, type information of the first network element, address information of the first network element, information about a terminal device served by the first network element, or information about a first service provided by the first network element.

12. The method according to claim 10 or 11, wherein the information about the at least one second network element further comprises priority information of the at least one second network element.

13. The method according to any one of claims 10 to 12, wherein the information about the at least one second network element further comprises capacity information of the at least one second network element.

14. The method according to any one of claims 10 to 13, wherein the request message is further used to request service status information of the first network element, and the service status information is used to determine whether the first network element is faulty; and the method further comprises:
sending, by the network repository function network element, the service status information to the charging function network element.

15. The method according to any one of claims 10 to 13, wherein the request message is further used to request service status information of the first network element, the service status information is used to determine whether the first network element is faulty, and the first information further comprises the service status information.

16. The method according to any one of claims 10 to 15, wherein the address information of the at least one second network element comprises an internet protocol IP address of each of the at least one second network element; or
the address information of the at least one second network element comprises an IP address of each of the at least one second network element and a port number for providing a service for a session of the terminal device.

17. The method according to any one of claims 10 to 16, wherein the method further comprises:
receiving, by the network repository function network element, a registration request message from the first network element, wherein the registration request message comprises the information about the at least one second network element.

18. The method according to claim 17, wherein the registration request message further comprises one or more of the following: the information about the first service provided by the first network element, the address information of the first network element, type information of a network element that is allowed to use the first service, priority information of the first network element, capacity information of the first network element, the service status information of the first network element, or the information about the terminal device served by the first network element; and the service status information is used to determine whether the first network element is faulty.

19. A communication method, comprising:
receiving, by a second network element, a notification message from a charging function network element, wherein the second network element is an alternative network element when a first network element is faulty;
determining, by the second network element based on a session identifier in a delivery address of the notification message, that the notification message is used to perform a corresponding operation on a session of a terminal device, wherein the session identifier is used to determine a session between the first network element and the charging function network element, and the session between the first network element and the charging function network element corresponds to the session of the terminal device; and
performing, by the second network element, a corresponding operation on the session of the terminal device based on the notification message.

20. The method according to claim 19, wherein
the second network element is a policy control function network element, and the notification message comprises information about a counter corresponding to the session of the terminal device; and the performing, by the second network element, a corresponding operation on the session of the terminal device based on the notification message comprises:
adjusting, by the second network element, a bandwidth of the session of the terminal device based on the information about the counter; or
the second network element is a session management function network element, and the notification message comprises reauthorization information; and the performing, by the second network element, a corresponding operation on the session of the terminal device based on the second information comprises:
initiating, by the second network element, a reauthorization charging request for the session of the terminal device based on the reauthorization information.

21. A communication method, comprising:
sending, by a first network element, a registration request message to a network repository function network element, wherein the registration request message comprises information about at least one second network element, the at least one second network element is an alternative network element when the first network element is faulty, and the information about the at least one second network element comprises address information of the at least one second network element; and
receiving, by the first network element, a registration response message from the network repository function network element.

22. The method according to claim 21, wherein the registration request message further comprises one or more of the following: information about a first service provided by the first network element, address information of the first network element, type information of a network element that is allowed to use the first service, priority information of the first network element, capacity information of the first network element, service status information of the first network element, or information about a terminal device served by the first network element; and the service status information is used to determine whether the first network element is faulty.

23. The method according to claim 21 or 22, wherein the information about the at least one second network element further comprises one or two of the following: priority information of the at least one second network element or capacity information of the at least one second network element.

24. A communication apparatus, comprising a module or a unit configured to implement the method according to any one of claims 1 to 9, a module or a unit configured to implement the method according to any one of claims 10 to 18, a module or a unit configured to implement the method according to claim 19 or 20, or a module or a unit configured to implement the method according to any one of claims 21 to 23.

25. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 9, enable the communication apparatus to perform the method according to any one of claims 10 to 18, enable the communication apparatus to perform the method according to claim 19 or 20, or enable the communication apparatus to perform the method according to any one of claims 21 to 23.

26. A chip, comprising a processor and a communication interface, wherein the communication interface is configured to: receive data and/or information, and transmit the received data and/or information to the processor, and the processor processes the data and/or information, to perform the method according to any one of claims 1 to 9, perform the method according to any one of claims 10 to 18, perform the method according to claim 19 or 20, or perform the method according to any one of claims 21 to 23.

27. A computer-readable storage medium, wherein the computer-readable storage medium stores a computer program, and when the computer program is executed, a computer is enabled to perform the method according to any one of claims 1 to 9, a computer is enabled to perform the method according to any one of claims 10 to 18, a computer is enabled to perform the method according to claim 19 or 20, or a computer is enabled to perform the method according to any one of claims 21 to 23.

28. A computer program product comprising instructions, wherein when the computer program product runs on a computer, the computer is enabled to perform the method according to any one of claims 1 to 9, the computer is enabled to perform the method according to any one of claims 10 to 18, the computer is enabled to perform the method according to claim 19 or 20, or the computer is enabled to perform the method according to any one of claims 21 to 23.

29. A communication system, comprising a charging function network element, a network repository function network element, and a second network element, wherein the charging function network element is configured to perform the method according to any one of claims 1 to 9, the network repository function network element is configured to perform the method according to any one of claims 10 to 18, and the second network element is configured to perform the method according to claim 19 or 20.
